# FASCICULE DE BREVET EUROPEEN

(11) **EP 0 524 274 B1**
(45) Date de publication et mention de la délivrance du brevet: **20.09.1995**
(21) Numéro de dépôt: 92902300.0
(22) Date de dépôt: 17.12.1991
(51) Int. Cl.: H02K 5/22, H02K 5/08, H02K 5/10, H02K 3/52

(54) **APPAREIL MUNI D'UN MOTEUR ELECTRIQUE D'ENTRAINEMENT**
MIT EINEM ELEKTRISCHEN ANTRIEBSMOTOR AUSGERÜSTETE VORRICHTUNG
DEVICE FITTED WITH AN ELECTRIC DRIVE MOTOR

(30) Priorité: 21.12.1990 FR 9016133
(43) Date de publication de la demande: 27.01.1993
(73) Titulaire: SOCIETE ELECTROMECANIQUE DU NIVERNAIS - SELNI, F-58000 Nevers (FR)
(72) Inventeur: COUSIN, Joel, F-92045 Paris-La Défense Cédex 67 (FR)
(74) Mandataire: Benoit, Monique
(86) Numéro de dépôt international: FR9101022
(87) Numéro de publication internationale: WO9211683

(56) Documents cités:
- DE-U- 8 633 206
- FR-A- 2 312 133
- FR-A- 2 552 595
- FR-A- 2 580 424

## Description

La présente invention concerne un appareil muni d'un moteur électrique d'entraînement.

Dans un appareil d'une fabrication connue tel qu'une électropompe, le moteur électrique d'entraînement comprend en général d'une part un rotor à aimants permanents supporté par le corps de l'appareil et d'autre part un stator comportant un noyau en tôles magnétiques en U, un bobinage électrique constitué soit par une seule bobine de fil électrique montée sur la partie centrale du U de ce noyau magnétique soit par deux bobines de fil en série montées sur les deux branches du U de ce noyau magnétique et un capot de protection, le bobinage électrique étant muni de bornes ou broches de connexion électrique. Dans l'assemblage de l'appareil, le bobinage fragile du stator est souvent protégé par un capot à la fin de l'opération seulement.

L'appareil est fréquemment livré sur demande avec des bornes ou broches de connexion électrique orientées soit vers le côté frontal soit vers le côté arrière de cet appareil et disposées soit suivant une norme standard soit suivant une autre norme.

Pour répondre à ces exigences de la clientèle, l'appareil connu est habituellement fabriqué avec plusieurs formes de corps et de capot de protection, ce qui augmente son prix de revient et entraîne un stockage coûteux de ces pièces.

Une demande de brevet français 2 580 424 présente un dispositif de bobines électriques à plusieurs positions de connexions et un moteur électrique utilisant un tel dispositif.

La présente invention visant à éviter les inconvénients précédents permet de réaliser à un prix économique un appareil à moteur électrique d'entraînement.

Selon l'invention, cet appareil est muni d'une seule forme de corps et d'une seule forme d'enveloppe de protection du bobinage électrique de ce moteur d'entraînement et susceptible de satisfaire différentes demandes d'orientation des bornes de connexion électrique vers l'avant ou vers l'arrière et de disposition de celle-ci suivant une norme standard ou une autre norme.

Cet appareil est pourvu d'une structure qui facilite une mécanisation ou robotisation d'assemblage et/ou de fabrication de plusieurs de ses éléments.

Un appareil selon l'invention est défini par la revendication 1. Pour mieux faire comprendre l'invention on en décrit ci-après un exemple de réalisation illustré par des dessins ci-annexés dont :
- la figure 1 représente une vue schématique partiellement en coupe d'un appareil muni d'un moteur d'entraînement sous forme d'une électropompe montrant un corps d'appareil et un sous-ensemble statorique autonome de ce moteur d'entraînement qui a des bornes ou broches de connexion électrique orientées vers le côté frontal de cet appareil ;
- la figure 2 représente une vue schématique partiellement en coupe d'un appareil muni d'un moteur d'entraînement sous forme d'une électropompe montrant un corps d'appareil identique à celui de la figure 1 et un sous-ensemble statorique autonome du moteur d'entraînement identique à celui de la figure 1 mais ayant des bornes ou broches de connexion électrique orientées vers le côté arrière de cet appareil ;
- la figure 3 représente une vue schématique à plat d'une borne ou broche de connexion électrique du bobinage du stator ;
- la figure 4 représente une vue en coupe partielle suivant l'axe IV-IV de la borne ou broche de connexion électrique de la figure 3 ;
- la figure 5 représente une vue de dessus d'une cosse de connexion électrique d'un protecteur thermique du bobinage du stator ;
- la figure 6 représente une vue d'en bout de la cosse de connexion électrique de la figure 5 ;
- la figure 7 représente une vue de face d'un bobinage du stator en U constitué de deux bobines de fil électrique en série et muni de bornes ou broches de connexion électrique disposées suivant une norme standard ;
- la figure 8 représente une vue de face d'un bobinage de stator en U constitué de deux bobines de fil électrique en série et muni de bornes ou broches de connexion électrique disposée suivant une norme "RASTS" ;
- la figure 9 représente une vue de face d'un bobinage de stator en U constitué de deux bobines de fil électrique en série protégé par un protecteur thermique et muni de bornes ou broches de connexion électrique disposées suivant une norme standard ;
- la figure 10 représente une vue de face d'un bobinage de stator en U constitué de deux bobines de fil électrique en série protégé par un protecteur thermique et muni de bornes ou broches de connexion électrqiue disposées suivant une norme "RAST5".

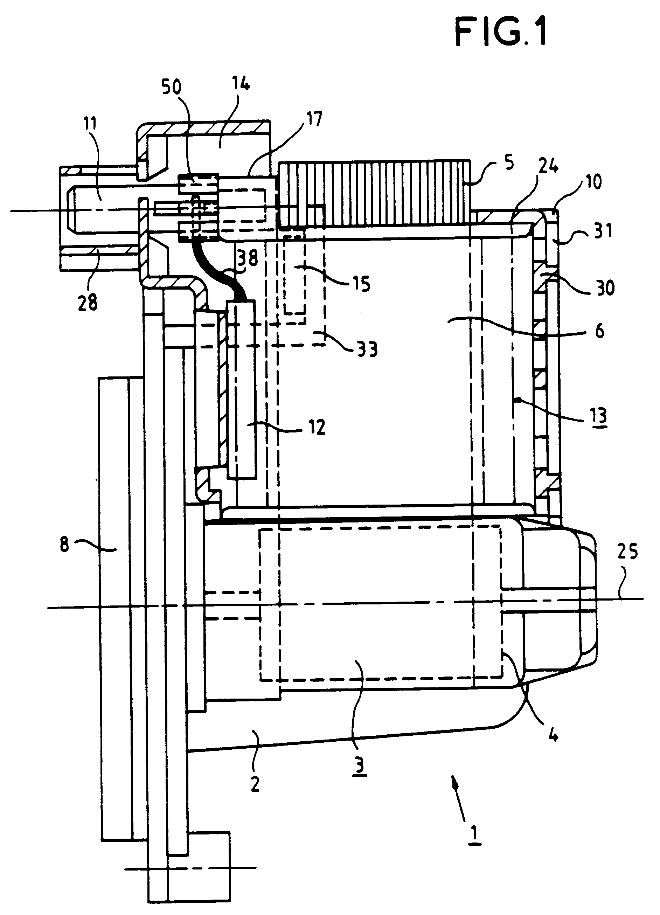

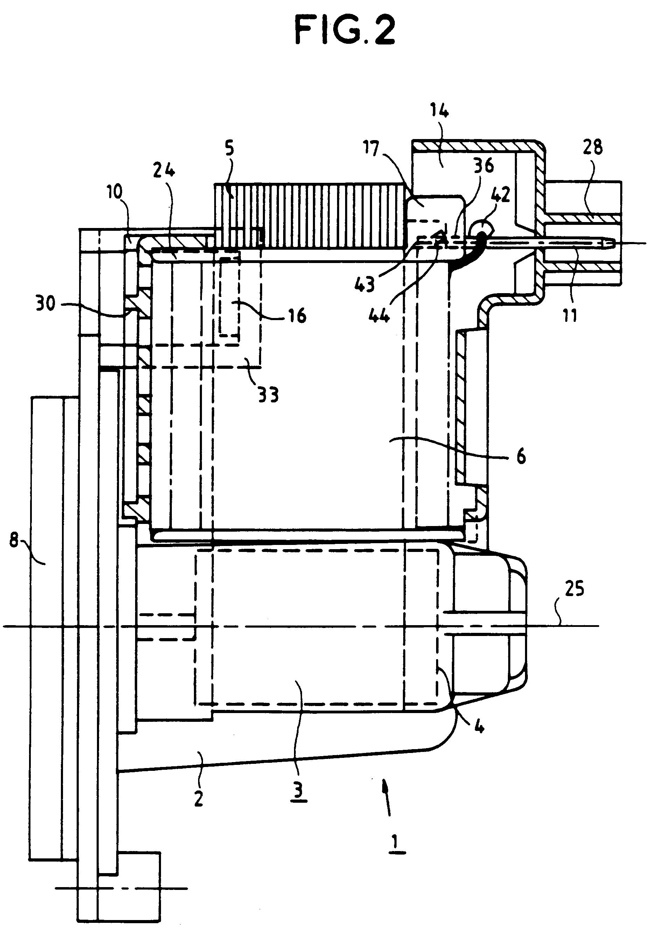

Un appareil muni d'un moteur électrique d'entraînement tel qu'une électromotopompe 1 illustrée schématiquement dans les figures 1 et 2 comprend un corps 2, un moteur électrique d'entraînement 3 du type à rotor à aimant permanent 4 et à stator formé d'un noyau en tôles magnétiques 5 en U et d'un bobinage électrique 6.

Dans l'exemple illustré le rotor 4 supporté en rotation par le corps 2 entraîne une roue à ailettes non représentée d'une pompe 8 montée dans la partie frontale de l'appareil 1, et le stator muni de son bobinage électrique 6 est monté à califourchon sur le corps 2 autour de ce rotor 4.

Selon l'invention, un appareil muni d'un moteur électrique d'entraînement 1 comprend une enveloppe 10 solidaire du stator, formant avec ce dernier un sous-ensemble statorique autonome 13 qui est protégé contre les agressions extérieures par cette enveloppe 10 et qui présente deux voies diamétralement oposées d'assemblage de ce sous-ensemble statorique autonome sur le corps 2 de l'appareil 1, une voie permettant d'orienter des bornes ou broches de connexion électrique 11 du bobinage 6 vers la partie frontale de l'appareil 1 (figure 1) et une voie permettant d'orienter ces bornes ou broches de connexion électrique vers la partie arrière de l'appareil 1 (figure 2).

Ce sous-ensemble statorique autonome 13 comprend l'enveloppe 10, le noyau magnétique 5 en U, le bobinage électrique 6 protégé contre les agressions extérieures par cette enveloppe 10, un protecteur thermique en option 12, un connecteur électrique multinorme 14 et des moyens mécaniques de fixation de ce sous-ensemble statorique autonome sur le corps 2 de l'appareil 1, tels que des bossages latéraux symétriques d'accrochage avant 15 et arrière 16, portés par l'enveloppe 10.

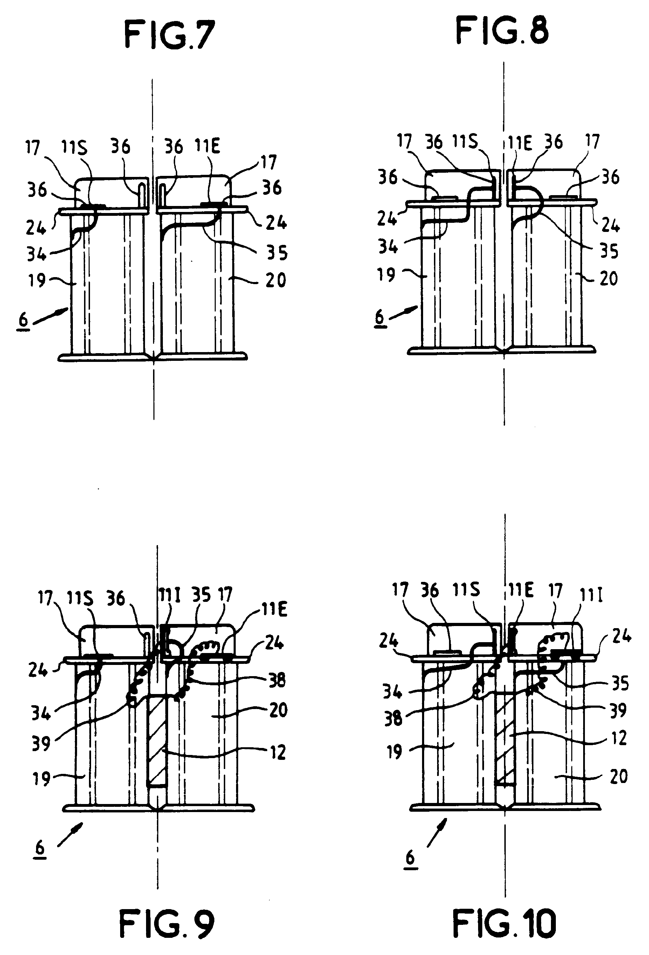

Dans le sous-ensemble statorique autonome 13, le bobinage électrique 6 est constitué soit par une seule bobine de fil électrique non représentée montée sur la partie centrale ou fond du U ou sur une branche du U du noyau magnétique 5 soit par deux bobines jumelées de fil électrique en série 19, 20 schématiquement illustrées dans les figures 7 à 10, montées sur les deux branches du U de ce noyau magnétique 5.

Un protecteur thermique d'un type connu en option 12 est disposé de préférence dans un espace disponible existant entre les deux bobines jumelées 19, 20 du bobinage électrique 6.

Un connecteur électrique multinorme 14 comprend d'une part des bornes ou broches de connexion électrique 11 du bobinage électrique 6 et/ou du protecteur thermique 12 fixées dans une saillie 17 d'une joue 24 d'une bobine non représentée ou des saillies 17 des joues adjacentes 24 électriquement isolantes de bobines jumelées 19, 20, celles des joues qui sont les plus éloignées de l'axe 25 du corps 2 de l'appareil 1 c'est-à-dire avoisinantes du fond du U du noyau magnétique 5 pour être distantes du corps 2 de l'appareil 1 et permettre d'éviter ainsi toute interférence spatiale entre ce corps 2 et le connecteur électrique multinorme 14, et d'autre part des guides 28 de coulissement formés dans une extrémité en saillie de l'enveloppe 10 pour des fiches femelles de branchement électrique d'un type connu non représenté qui sont enfilées sur ces bornes ou broches de connexion électrique 11.

L'enveloppe 10 réalisée en une matière électriquement isolante et résistante aux chocs mécaniques recouvre à la fois le bobinage électrique 6 et les bornes ou broches de connexion électrique 11 et les protège. Cette enveloppe 10 comprend un couvercle ajouré 30 monté sur ses parois 31 pivotant sur des charnières non représentées ou amovibles par assemblage par emboîtement. Ce couvercle ajouré 30 laisse traverser un courant d'air de refroidissement du stator.

Le sous-ensemble statorique autonome 13 avec ses deux voies opposées d'assemblage sur le corps 2 de l'appareil permet de répondre facilement aux demandes d'orientation des bornes ou broches de connexion électrique 11 vers l'avant ou vers l'arrière de l'appareil 1. Les bossages latéraux symétriques d'accrochage avant 15 et arrière 16 portées par l'enveloppe 10 permettent de retenir et de bloquer en place le sous-ensemble statorique autonome 13 sur le corps 2 de l'appareil par accrochage à des oreilles associées 33 portées par ce corps 2. L'appareil 1 est ainsi particulièrement économique en fabrication et avantageux en stockage étant donné qu'une seule forme du corps 2 de l'appareil 1 et une seule forme de l'enveloppe 10 du sous-ensemble statorique autonome 13 sont suffisantes pour rendre cet appareil 1 apte à répondre aux demandes d'orientation des bornes ou broches de connexion électrique 11 vers l'avant ou vers l'arrière.

Dans l'exemple illustré aux figures 1, 2 et 7 à 10, le connecteur électrique multinorme 14 est réalisé suivant deux normes, une norme standard et une norme connue dans la désignation "RAST5" Dans le connecteur électrique multinorme 14, les bornes ou broches de connexion 11 constituant des bornes ou broches d'entrée E et de sortie S sont plates et ont d'une part des écartements prédéterminés relativement petits pour la norme "RAST5" (figures 8 et 10) et relativement grands pour la norme standard (figures 7 et 9) et d'autre part une disposition parallèle à plat suivant la norme standard et une disposition parallèle sur chant suivant la norme "RAST5".

Selon une fabrication connue, une première extrémité du bobinage 6 est soudée à une borne connue sur laquelle est venu soudé un premier fil d'alimentation électrique du protecteur thermique 12. Dans ce cas, cette première extrémité du bobinage 6 subit deux chauffages dommageables consécutifs de soudage.

Selon l'invention, le connecteur électrique multinorme 14 de l'appareil 1 comprend d'une part dans une ou des saillies 17 des joues adjacentes 24 de bobines jumelées 19, 20 du bobinage électrique 6 quatre trous ou fentes identiques 36 disposées deux à deux suivant deux normes, par exemple, une norme standard et une norme "RAST5" et destinées à recevoir et à fixer des bornes ou broches de connexion électrique 11, et d'autre part trois bornes ou broches identiques de connexion électrique 11 dont les deux premières bornes sont reliées respectivement aux deux extrémités 34, 35 du bobinage électrique 6 (figures 7 à 10) et la troisième borne est reliée au premier 38 des deux fils d'alimentation 38, 39 d'un protecteur thermique en option 12 quand une association de ce protecteur thermique 12 au bobinage électrique 6 est demandée (figures 9 et 10), le deuxième fil d'alimentation 39 de ce protecteur thermique 12 étant connecté à l'une de ces deux premières bornes ou broches de connexion électrique 11.

Dans le cas d'une absence du protecteur thermique 12, dans le sous-ensemble statorique autonome 13 les deux premières bornes ou broches de connexion 11 reliées respectivement aux deux extrémités 34, 35 du bobinage électrique 6 et montées dans deux trous ou fentes 36 des saillies 17 des joues 24 de bobines jumelées 19, 20 constituent dans le connecteur électrique multinorme 14, des bornes ou broches de connexion d'entrée 11E et de sortie 11S suivant une norme standard dans la figure 7 et suivant une norme "RAST5" dans la figure 8.

Dans le cas d'une présence demandée du protecteur thermique 12 dans le sous-ensemble statorique autonome 13, l'une des deux premières bornes ou broches de connexion 11 reliée à la première 34 des extrémités 34, 35 du bobinage électrique 6 et montée dans un trou ou fente 36 des saillies 17 des joues 24 de bobines jumelées 19, 20 et la troisième borne ou broche de connexion 11 reliée au premier 38 des deux fils d'alimentation de ce protecteur thermique 12 et montée dans un autre trou ou fente 36 de ces saillies 17 des joues 24 de bobines jumelées 19,20 constituent dans le connecteur électrique multinorme 14 des bornes ou broches de connexion de sortie 11S et d'entrée 11E suivant une norme standard dans la figure 9 et suivant une norme "RAST5" dans la figure 10 tandis que l'autre des deux premières bornes ou broches de connexion 11 étant reliée d'une part à la deuxième extrémité 35 du bobinage électrique 6 et d'autre part au deuxième fil 39 des deux fils d'alimentation 38, 39 de ce protecteur thermique 12, et montée dans un troisième trou ou fente 36 de ces saillies 17 des joues 24 de bobines jumelées 19, 20 constitue une borne ou broche intermédiaire 111 de connexion en série de ces bobinages électriques 6 et protecteur thermique 12.

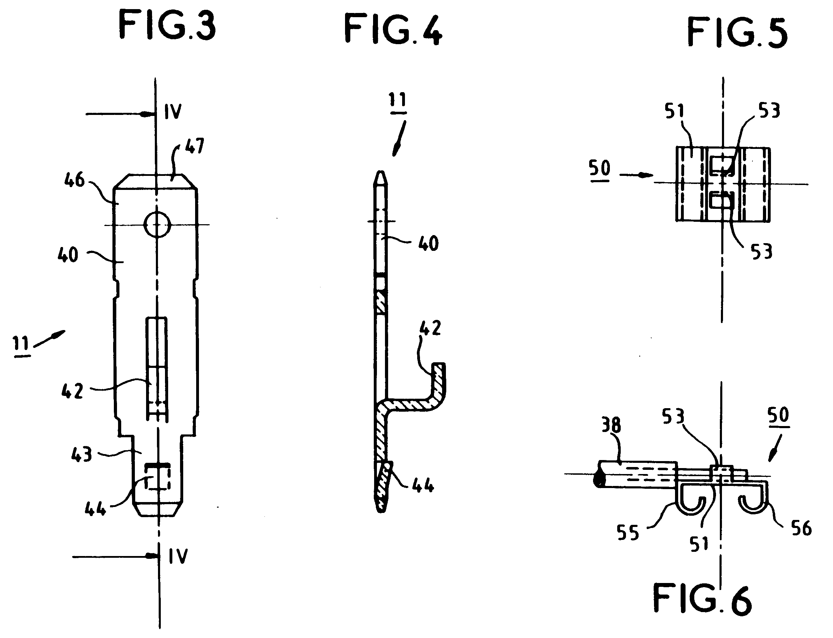

Dans l'exemple illustré aux figures 3 et 4, une borne ou broche de connexion électrique 11, réalisée en un métal élastique et mécanique résistant comprend un corps plat 40 pourvu dans sa zone centrale d'une languette découpée et relevée 42, dans une première extrémité ou extrémité de fixation 43, d'un ergot de blocage découpé et relevé 44 et dans une deuxième extrémité ou extrémité de connexion 46, d'une pointe biseautée 47.

La languette 42 est prête à une fixation d'une extrémité d'un bobinage électrique 6 par soudage ou par agrafage et l'ergot 44 est destinée à bloquer en place le corps plat 40 c'est-à-dire la borne ou broche 11 quand son extrémité de fixation 43 est engagée à fond dans une fente ou trou 36 des saillies 7 des joues 24 de bobines jumelées 19,20 (figure 2).

La pointe biseautée 47 facilite une réception d'une fiche femelle de branchement électrique.

Selon l'invention, dans le connecteur électrique multinorme 14 du sous ensemble statorique autonome 13, des cosses ou clips 50 assurent une connexion électrique entre les deux fils d'alimentation 38, 39 d'un protecteur thermique 12 et les bornes ou broches de connexion 11 par enfilage ou emmanchement à force sur ces dernièes.

Une cosse ou clip 50 réalisée en un métal élastique et mécaniquement résistant comprend un corps plat 51 pourvu dans sa partie centrale, d'ergots découpés et relevés 53 destinés à une fixation par soudage, agrafage ou sertissage d'un des deux fils d'alimentation 38, 39 du protecteur thermique 12 et dans ses bords longitudinaux de pattes latérales recourbées vers l'intérieur 55, 56. Lors d'un enfilage ou emmanchement de la cosse ou clip 50 sur une borne ou broche de connexion 11 du connecteur électrique 14, ses pattes latérales recourbées 55, 56 qui poussent et appliquent élastiquement le corps plat 40 de cette borne ou broche de connexion 11 contre le corps plat 51 de cette cosse ou clip 50, réalisent ainsi un bon contact électrique de connexion.

Selon ce procédé, les deux fils d'alimentation d'un protecteur thermique 12 sont d'abord fixés respectivement sur deux cosses ou clips 50, puis lors d'un branchement de ce protecteur thermique, ces cosses ou clips 50 sont emmanchés ou enfilés à force sur les bornes ou broches de connexion 11 du connecteur électrique multinorme 14. Toutes ces opérations peuvent être facilement et avantageusement mécanisées ou robotisées.

Etant donné que dans le sous-ensemble statorique autonome 13, le protecteur thermique 12 est habituellement branché électriquement en série avec le bobinage électrique 6 du stator, il suffit alors en premier lieu d'enfiler la première de ces deux cosses ou clips 50 reliées à ce protecteur thermique 12 sur une borne ou broche de connexion 11 du connecteur électrique multinorme 14, qui porte la première des deux extrémités du bobinage électrique 6 du stator, et de transformer par conséquent cette borne ou broche en borne ou broche intermédiaire 11I de connexion, en deuxième lieu d'enfiler la deuxième de ces deux cosses ou clips 50 sur une borne ou broche 11 libre de toute liaison électrique avec le bobinage électrique 6 et de transformer cette borne ou broche en borne ou broche de connexion d'entrée 11E, et en troisième lieu de monter la borne ou broche de connexion 11 qui porte la deuxième des deux extrémités du bobinage électrique 6 du stator dans le connecteur électrique multinorme 14 et la transformer en borne ou broche de connexion de sortie 11S (figures 9 et 10). Toutes ces opérations sont également facilement et avantageusement mécanisées ou robotisées.

Au niveau de la borne ou broche de connexion intermédiaire 11I, la cosse ou clip 50 enfilée ou emmanchée sur la borne ou broche 11, permet d'éviter à un bobinage électrique 6 d'un stator, deux chauffages consécutifs dommageables dans un branchement électrique en série d'un protecteur thermique 12 et de ce bobinage électrique 6 par soudage, tout en facilitant une mécanisation ou robotisation de ces opérations.

## Revendications

1. Appareil muni d'un moteur électrique d'entraînement (3) et d'un corps (2), le moteur (3) comprenant une enveloppe de protection (10), caractérisé en ce que, le stator (5, 6) du moteur étant monté sur le corps, l'enveloppe (10) est préalablement rendue solidaire du stator (5, 6) avant le montage de ce dernier sur le corps (2), l'enveloppe (10) formant avec le stator (5, 6) un sous-ensemble statorique autonome (13) qui est protégé contre les agressions extérieures et qui présente deux voies diamétralement opposées d'assemblage de ce sous-ensemble statorique autonome (13) sur le corps (2), une voie permettant d'orienter des bornes ou broches de connexion électrique (11) d'un bobinage (6) du stator vers la partie frontale de l'appareil et une voie permettant de les orienter vers la partie arrière de l'appareil.

2. Appareil selon la revendication 1, caractérisée en ce que le sous-ensemble statorique autonome (13) comprend l'enveloppe (10), le stator comportant un noyau magnétique (5) en U et un bobinage électrique (6), un protecteur thermique en option (12) de ce bobinage, un connecteur électrique multinorme (14) de ces protecteurs thermiques (12) et bobinage (6), et des moyens de fixation de ce sous-ensemble autonome (13) sur le corps (2) de l'appareil.

3. Appareil selon la revendication 2, caractérisé en ce que dans le sous-ensemble statorique autonome (13), l'enveloppe (10) qui recouvre à la fois le bobinage électrique (6) et les bornes ou broches de connexion électrique (11) comprend un couvercle ajouré (30) laissant traverser un courant d'air de refroidissement du stator, et des bossages latéraux symétriques d'accrochage avant (15) et arrière (16) servant de moyens de fixation de ce sous-ensemble statorique autonome (13) sur le corps (2) de l'appareil.

4. Appareil selon la revendication 2, caractérisé en ce que dans le sous-ensemble statorique autonome (13), le connecteur électrique multinorme (14) comprend d'une part des bornes ou broches de connexion électriques (11) du bobinage électrique (6) et/ou du protecteur thermique (12) fixées dans une ou des saillies (17) d'une ou des joues adjacentes (24) de bobine du bobinage électrique (6) celles qui sont les plus éloignées de l'axe (25) du corps (2) de l'appareil et d'autre part des guides (28) de coulissement formés dans une extrémité en saillie de l'enveloppe (10) pour des fiches femelles de branchement électriques enfilées sur ces bornes ou broches de connexion électrique (11).

5. Appareil selon l'une des revendications 2 et 4, caractérisé en ce que dans le sous-ensemble statorique autonome (13) le connecteur électrique multinorme (14) réalisé suivant deux normes telles qu'une norme standard et une norme dénommée "RAST5" comprend d'une. part dans la ou les saillies (17) de la ou des joues adjacentes (24) de bobine du bobinage électrique (6), quatre trous ou fentes identiques (36) disposées deux à deux suivant ces deux normes et destinées à recevoir et à fixer des bornes ou broches de connexion électrique (11) et d'autre part trois bornes ou broches identiques de connexion électriques (11) dont les deux premières bornes ou broches sont reliées respectivement aux deux extrémités (34, 35) du bobinage électrique (6) et la troisième borne ou broche est reliée au premier (38) des deux fils d'alimentation (38, 39) du protecteur thermique en option (12) quand une association de ce protecteur thermique (12) au bobinage électrique (6) est demandée et constitue une borne ou broche de connexion d'entrée (11E), le deuxième fil d'alimentation (39) de ce protecteur thermique (12) étant connecté à l'une des deux premières bornes ou broches de connexion électrique (11) pour la transformer en une borne ou broche de connexion intermédiaire (11I), l'autre de ces deux premières bornes ou broches constituant une borne ou broche de connexion de sortie (11S).

6. Appareil selon l'une des revendications 4 et 5, caractérisé en ce que dans le connecteur électrique multinorme (14), les bornes ou broches de connexion (11) identiques comprennent un corps plat (40) pourvu dans sa zone centrale, d'une languette découpée et relevée (42) prête à fixer une des extrémités du bobinage électrique (6), dans une première extrémité (43), d'un ergot découpé et relevé (44) assurant un blocage en place du corps plat (40), et dans une deuxième extrémité (46), d'une pointe bisautée (47) facilitant une réception d'une fiche femelle de branchement électrique.

7. Appareil selon l'une des revendications 5 et 6, caractérisé en ce que le connecteur électrique multinorme (14) comprend des cosses ou clips (50) qui assurent une connexion électrique entre les deux fils d'alimentation (38, 39) d'un protecteur thermique (12) et les bornes ou broches de connexion (11), par enfilage ou emmanchement sur ces dernières.

8. Appareil selon la revendication 7, caractérisé en ce que dans le connecteur électrique multinorme (14) une cosse ou clip (50) comprend un corps plat (51) pourvu dans sa partie centrale d'ergots découpés et relevés (53) destinés à une fixation d'un des deux fils d'alimentation (38, 39) du protecteur thermique (12) et dans ses bords longitudinaux de pattes latérales recourbées vers l'intérieur (55, 56).

9. Appareil selon l'une des revendications 1 et 2, caractérisé en ce que dans le sous-ensemble statorique autonome (13), l'enveloppe (10) est réalisée en une matière électriquement isolante et résistante aux chocs mécaniques.

10. Appareil selon l'une des revendications 4 à 8, caractérisé en ce que dans le connecteur électrique multinorme (14) les bornes ou broches de connexion (11) et les cosses ou clips (50) sont réalisées en un métal élastique et mécaniquement résistant.

## Patentansprüche

1. Gerät mit einem elektrischen Antriebsmotor (3) und einem Körper (2), wobei der Motor (3) ein Schutzgehäuse (10) enthält, dadurch gekennzeichnet, daß das Gehäuse (10), da der Stator (5, 6) des Motors an dem Körper angebracht ist, vor der Montage des Stators an dem Körper (2) fest mit dem Stator (5, 6) verbunden wird, wobei das Gehäuse (10) mit dem Stator (5, 6) eine unabhängige Stator-Unterbaugruppe (13) bildet, die gegen äußere Angriffe geschützt ist und zwei zueinander diametral entgegengesetzte Wege zum Einbauen der unabhängigen Stator-Unterbaugruppe (13) in den Körper (2) aufweist, wobei ein Weg ermöglicht, die elektrischen Verbindungsklemmen oder -stifte (11) einer Wicklung (6) des Stators zum vorderen Abschnitt des Geräts auszurichten, und wobei ein Weg ermöglicht, diese zum hinteren Abschnitt des Geräts auszurichten.

2. Gerät nach Anspruch 1, dadurch gekennzeichnet, daß die unabhängige Stator-Unterbaugruppe (13) das Gehäuse (10) umfaßt, wobei der Stator einen U-förmigen magnetischen Kern (5) und eine elektrische Wicklung (6) umfaßt sowie eine optionale Wärme-Schutzvorrichtung (12) für diese Wicklung, einen elektrischen Mehrnormen-Verbinder (14) dieser Wärme-Schutzvorrichtungen (12) und der Wicklung (6) und Mittel zum Befestigen der unabhängigen Unterbaugruppe (13) an dem Körper (2) des Geräts.

3. Gerät nach Anspruch 2, dadurch gekennzeichnet, daß in der unabhängigen Stator-Unterbaugruppe (13) das Gehäuse (10), welches gleichzeitig die elektrische Wicklung (6) und die elektrischen Verbindungsklemmen oder -stifte (11) abdeckt, eine durchbrochene Abdeckung (30) umfaßt, die einen Luftstrom zum Kühlen des Stators hindurchtreten läßt, sowie zueinander symmetrische, seitliche vordere Vorsprünge (15) und seitliche hintere Vorsprünge (16), die als Mittel zur Befestigung der unabhängigen Stator-Unterbaugruppe (13) an dem Körper (2) des Geräts dienen.

4. Gerät nach Anspruch 2, dadurch gekennzeichnet, daß der elektrische Mehrnormen-Verbinder (14) der unabhängigen Stator-Unterbaugruppe (13) zum einen elektrische Verbindungsklemmen oder -stifte (11) der elektrischen Wicklung (6) und/ oder der Wärme-Schutzvorrichtung (12) umfaßt, die in einem oder mehreren Vorsprüngen (17) von dem Satz oder von den benachbarten Sätzen (24) der Spule der elektrischen Wicklung (6) befestigt sind, die von der Achse (25) des Körpers (2) des Geräts am weitesten entfernt sind, und zum anderen Gleitführungen (28), die an einem hervorstehenden Ende (10) für elektrische Anschluß-Steckbuchsen ausgebildet sind, die auf die elektrischen Verbindungsklemmen oder -stifte(11) aufgeschoben sind.

5. Gerät nach einem der Ansprüche 2 und 4, dadurch gekennzeichnet, daß bei der unabhängigen Stator-Unterbaugruppe (13) der gemäß zweier Normen, beispielsweise einer Standardnorm und einer "RAST5" genannten Norm, ausgebildete elektrische Mehrnormen-Verbinder (14) zum einen in dem Vorsprung oder den Vorsprüngen (17) des Satzes oder der benachbarten Sätze (24) der Spule der elektrischen Wicklung (6) vier identische Löcher oder Schlitze (36) umfaßt, die paarweise gemäß den beiden Normen angeordnet und dafür ausgelegt sind, die elektrischen Verbindungsklemmen oder -stifte (11) aufzunehmen und zu befestigen, und zum anderen drei identische elektrische Verbindungsklemmen oder -stifte (11), von denen die beiden ersten Klemmen oder Stifte mit zwei Enden (34, 35) der elektrischen Wicklung (6) verbunden sind und die dritte Klemme oder der dritte Stift mit dem ersten (38) von zwei Versorgungsdrähten (38, 39) der optionalen Wärme-Schutzvorrichung (12), wenn eine Verbindung dieser Wärme-Schutzvorrichtung (12) mit der elektrischen Wicklung (6) gewünscht ist, verbunden ist und eine Verbindungseingangsklemmen oder einen Verbindungseingangsstift (11E) bildet, wobei der zweite Versorgungsdraht (39) der Wärme-Schutzvorrichtung (12) mit einer oder einem der beiden ersten elektrischen Verbindungsklemmen oder Verbindungsstifte (11) verbunden ist, um diese oder diesen in eine Verbindungszwischenklemme oder einen Verbindungszwischenstift (11I) zu transformieren, wobei die andere oder der andere der beiden ersten Klemmen oder Stifte eine Verbindungsausgangsklemme oder einen Verbindungsausgangsstift (11S) bildet.

6. Gerät nach einem der Ansprüche 4 und 5, dadurch gekennzeichnet, daß in dem elektrischen Mehrnormen-Verbinder (14) die identischen Verbindungsklemmen oder -stifte (11) einen flachen Körper (40) umfassen, der in seiner Mittelzone mit einer ausgeschnittenen und hervortretenden Zunge (42) versehen ist, die zum Befestigen eines der Enden der elektrischen Wicklung (6) ausgebildet ist, sowie an einem ersten Ende (43) mit einem ausgeschnittenen und hervortretenden Vorsprung (44), der ein Blockieren des flachen Körpers (40) an seinem Ort gewährleistet, und an einem zweiten Ende (46) mit einer angefasten Spitze (47), die das Aufnehmen einer elektrischen Anschluß-Steckbuchse erleichtert.

7. Gerät nach einem der Ansprüche 5 und 6, dadurch gekennzeichnet, daß der elektrische Mehrnormen-Verbinder (14) Kabelschuhe oder Clips (50) umfaßt, die eine elektrische Verbindung zwischen den beiden Versorgungsdrähten (38, 39) einer Wärme-Schutzvorrichtung (12) und den Verbindungsklemmen oder -stiften (11) durch Aufschieben oder Aufstecken auf die letztgenannten gewährleisten.

8. Gerät nach Anspruch 7, dadurch gekennzeichnet, daß in dem elektrischen Mehrnormen-Verbinder (14) ein Kabelschuh oder Clip (50) einen flachen Körper (51) umfaßt, der in seinem Mittelabschnitt mit ausgeschnittenen und hervortretenden Vorsprüngen (53) versehen ist, die für eine Verbindung mit einem der beiden Versorgungsdrähte (38, 39) der Wärme-Schutzvorrichtung (12) vorgesehen sind, und an seinen Längsrändern mit nach innen umgebogenen Seitenlaschen (55, 56).

9. Gerät nach einem der Ansprüche 1 und 2, dadurch gekennzeichnet, daß das Gehäuse (10) der unabhängigen Stator-Unterbaugruppe (13) aus einem elektrisch isolierenden und gegen mechanische Schläge widerstandsfähigen Material ausgebildet ist.

10. Gerät nach einem der Ansprüche 4 bis 8, dadurch gekennzeichnet, daß die Verbindungsklemmen oder -stifte (11) und die Kabelschuhe oder Clips (50) des elektrischen Mehrnormen-Verbinders (14) aus einem elastischen und mechanisch widerstandsfähigen Material ausgebildet sind.

## Claims

1. Apparatus equipped with an electric drive motor(3) and with a body (2), the motor (3) comprising a protective casing (10) characterized in that, with the stator (5, 6) of the motor mounted on the body, the casing (10) is first of all secured to the stator (5, 6) before the latter is mounted onto the body (2), the casing (10) forming, with the stator (5, 6), a self-contained stator subassembly (13) which is protected against external attack and which has two diametrally opposite ways of assembling this self-contained stator subassembly (13) onto the body (2), one way making it possible to orient electrical connection pins or terminals (11) of a coil (6) of the stator towards the front part of the apparatus and one way making it possible to orient them towards the rear part of the apparatus.

2. Apparatus according to Claim 1, characterized in that the self-contained stator subassembly (13) comprises the casing (10), the stator including A U-shaped magnetic core (5) and an electrical coil (6), an optional thermal device (12) for protecting this coil, a multi-standard electrical connector (14) for these thermal protection devices (12) and coil (6), and means of fixing this self-contained subassembly (13) onto the body (2) of the apparatus.

3. Apparatus according to Claim 2, characterized in that, in the self-contained stator subassembly (13), the casing (10) which covers both the electrical coil (6) and the electrical connection pins or terminals (11) includes a pierced cover (30) letting through a current of air for cooling the stator, and front (15) and rear (16) symmetric lateral fastening bosses serving as means for fixing this self-contained stator subassembly (13) onto the body (2) of the apparats.

4. Apparatus according to Claim 2, characterized in that, in the self-contained stator subassembly (13), the multi-standard electrical connector (14) comprises, on the one hand, terminals or pins for electrical connection (11) of the electrical coil (6) and/or of the thermal protection device (12) which are fixed in one or more projections (17) of one or more adjacent coil cheeks (24) of the electrical coil (6), those cheeks which are the furthest from the axis (25) of the body (2) of the apparatus and, on the other hand, sliding guides (28) formed in one projecting end of the casing (10) for female electrical connection plugs fitted onto these electrical connection pins or terminals (11).

5. Apparatus according to one of Claims 2 and 4, characterized in that, in the self-contained stator subassembly (13) the multi-standard electrical connector (14) produced according to two standards, such as a normal standard and a standard called "RAST5" comprises, on the one hand, in the projection or projections (17) of the adjacent coil cheek or cheeks (24) of the electrical coil (6), four identical holes or slots (36) arranged in pairs according to these two standards and intended to accommodate and to hold electrical connection pins or terminals (11) and, on the other hand, three identical electrical connection pins or terminals (11) the first two terminals or pins of which are linked respectively to the two ends (34, 35) of the electrical coil (6) and the third terminal or pin is linked to the first (38) of the two feed wires (38, 39), of the optional thermal protection device (12) when the fitting of this thermal protection device (12) to the electrical coil (6) is required, and constitutes an input connection pin or terminal (11E), the second feed wire (39) of this thermal protection device (12) being connected to one of the first two electrical connection pins or terminals (11) in order to convert it into an intermediate connection pin or terminal (11I), the other of these first two pins or terminals constituting an output connection pin or terminal (11S).

6. Apparatus according to one of Claims 4 and 5, characterized in that, in the multi-standard electrical connector (14), the identical connection pins or terminals (11) comprise a flat body (40) provided in its central area with a tab which is cut out and raised (42), ready to hold one of the ends of the electrical coil (6) in a first end (43) with a cut-out and raised key (44) locking the flat body (40) in place, and, in a second end (46) with a bevelled point (47) facilitating reception of a female electrical connection plug.

7. Apparatus according to one of Claims 5 and 6, characterized in that the multi-standard electrical connector (14) comprises studs or clips (50) which provide an electrical connection between the two feed wires (38, 39) of a thermal protection device (12) and the connection pins or terminals (11), by being slipped over or fitted round the latter.

8. Apparatus according to Claim 7, characterized in that, in the multi-standard electrical connector (14), a stud or clip (50) comprises a flat body (51) provided in its central part with cut-out and raised keys (53) intended for fixing one of the two feed wires (38, 39) of the thermal protection device (12) and, in its longitudinal edges, with inwardly curved lateral clasps (55, 56).

9. Apparatus according to one of Claims 1 and 2, characterized in that, in the self-contained stator subassembly (13), the casing (10) is produced from a material which is electrically insulating and resistant to mechanical impacts.

10. Apparatus according to one of Claims 4 to 8, characterized in that, in the multi-standard electrical connector (14), the connection pins or terminals (11) and the studs or clips (50) are produced from an elastic and mechanically strong metal.
